Europäisches Patentamt

European Patent Office

Office européen des brevets

(19)

(11) Veröffentlichungsnummer: **0 285 909 B1**

# (12) EUROPÄISCHE PATENTSCHRIFT

(45) Veröffentlichungstag der Patentschrift: **11.12.91**

(21) Anmeldenummer: **88104619.7**

(22) Anmeldetag: **23.03.88**

(51) Int. Cl.⁵: **F16F  9/46, B60G 17/08,
F16F 9/34**

(54) Stossdämpfer.

(30) Priorität: **01.04.87 DE 3710972
14.01.88 DE 3800864**

(43) Veröffentlichungstag der Anmeldung:
**12.10.88 Patentblatt  88/41**

(45) Bekanntmachung des Hinweises auf die
Patenterteilung:
**11.12.91 Patentblatt  91/50**

(84) Benannte Vertragsstaaten:
**AT DE FR GB IT NL SE**

(56) Entgegenhaltungen:
| | |
|---|---|
| EP-A- 0 211 442 | BE-A- 770 759 |
| DE-A- 2 911 768 | FR-A- 1 095 506 |
| FR-A- 2 082 646 | FR-A- 2 566 078 |
| GB-A- 664 770 | US-A- 2 321 000 |
| US-A- 3 286 736 | US-A- 4 635 959 |

(73) Patentinhaber: **ROBERT BOSCH GMBH
Postfach 50
W-7000 Stuttgart 1(DE)**

(72) Erfinder: **Engelsdorf, Kurt, Dr.-Ing.
Schulstrasse 1/1
W-7122 Besigheim 3(DE)**
Erfinder: **Hägele, Karl-Heinz, Dipl.-Phys. Dr.
Gerokstrasse 70
W-7143 Vaihingen/Enz(DE)**
Erfinder: **Taubitz, Bernd
Hermann-Essig-Strasse 106
W-7141 Schwieberdingen(DE)**
Erfinder: **Tran, Quang Ngoc, Dr.-Ing.
Stossäckerstrasse 60
W-7000 Stuttgart 80(DE)**
Erfinder: **Zieher, Peter, Ing.(grad.)
Buchbergstrasse 22
W-7147 Eberdingen(DE)**

## Beschreibung

### Stand der Technik

Die Erfindung geht aus von einem Stoßdämpfer nach der Gattung des Hauptanspruchs. Durch die GB-A-664 770 ist ein Stoßdämpfer bekannt geworden, dessen Dämpfung mittels einer elektromagnetischen Stellvorrichtung veränderbar ist. Die Stellvorrichtung ist im Bereich des Dämpferkolben angeordnet. Sie umfaßt eine Magnetspule, einen Anker und einen mit dem Anker verbundenen Steuerschieber, dessen Lage die Androsselung des zwischen den Arbeitsräumen sich austauschenden Dämpfungsfluids bestimmt.

Bei der bekannten Lösung muß ein Kompromiß zwischen maximal möglichem Drosselquerschnitt und der Feinsteuerbarkeit im Bereich kleiner Drosselquerschnitte eingegangen werden. Für die Steuerkante steht nicht der gesamte Umfang des Steuerschiebers zur Verfügung.

Ist der Durchmesser des in der GB-A-664 770 gezeigten Steuerschiebers groß und/oder kann das Druckmedium den Steuerschieber über viele radiale Öffnungen anströmen, so leidet darunter die Feinsteuerbarkeit des Stoßdämpfers für den Bereich starker Dämpfung. Wird jedoch der Durchmesser des Steuerschiebers klein bemessen und/oder kann das Druckmedium den Steuerschieber über nur wenige radiale Öffnungen anströmen, so kann die Dämpferkraft mit Hilfe des Steuerschiebers nur wenig abgesenkt werden. Bei dem bekannten Stoßdämpfer muß stets ein Kompromiß eingegangen werden zwischen guter Feinsteuerbarkeit und großen Durchflußströmen durch die Strömungsverbindung.

Die EP-A-211 442 zeigt einen Stoßdämpfer mit einem Steuerschieber, dessen Lage mit Hilfe eines Gebers ermittelt wird. Allerdings läßt sich bei diesem Stoßdämpfer die Dämpferkraft nur in einer begrenzten Anzahl von Stufen verstellen.

### Vorteile der Erfindung

Demgegenüber bietet der mit den kennzeichnenden Merkmalen einer der Hauptansprüche ausgestattete Stoßdämpfer in vorteilhafter Weise die Möglichkeit zur Verwirklichung so gut wie jeder gewünschten Schieberhub-Dämpferkraft-Charakteristik. Die einstellbaren Dämpfungswerte sind sehr weit gespannt. Das Profil kann zwischen weiten Grenzen nahezu beliebig ausgebildet werden.

Durch die in den Unteransprüchen aufgeführten Maßnahmen sind vorteilhafte Weiterbildungen und Verbesserungen der Stoßdämpfer möglich.

Insbesondere läßt sich vorteilhafterweise das Profil so gestalten, daß sich eine meist besonders vorteilhafte lineare Abhängigkeit der Dämpferkraft vom Hub des Schiebers ergibt.

Einerseits ist durch das Steuerprofil am Steuerschieber und/oder am Kolben ein sehr feinfühliges Steuern der Dämpfungskraft möglich, andererseits kann aber auch ein sehr großer Drosselquerschnitt bei relativ kleinen Bauteilabmessungen eingestellt werden.

Durch die aufgeführten Maßnahmen werden die von der durchströmenden Dämpfungsflüssigkeit herrührenden Kräfte auf ein Minimum reduziert.

Wegen der geringen Masse des Schiebers, dem geringen Hub und den geringen Kräften erhält man eine hohe Stellgeschwindigkeit bzw. es sind nur kleine und kostengünstige Stellmagnete erforderlich.

Durch den in den Ansprüchen 20 und 21 aufgeführten Geber wird, zusammen mit einer elektronischen Steuereinheit, sichergestellt, daß der Drosselquerschnitt seinen vorgesehenen Wert erreicht, unabhängig z.B. von eventuellen Reibungskräften zwischen Anker und Kolbenstange, Strömungskräften, elektrischen und magnetischen Verlusten.

### Zeichnung

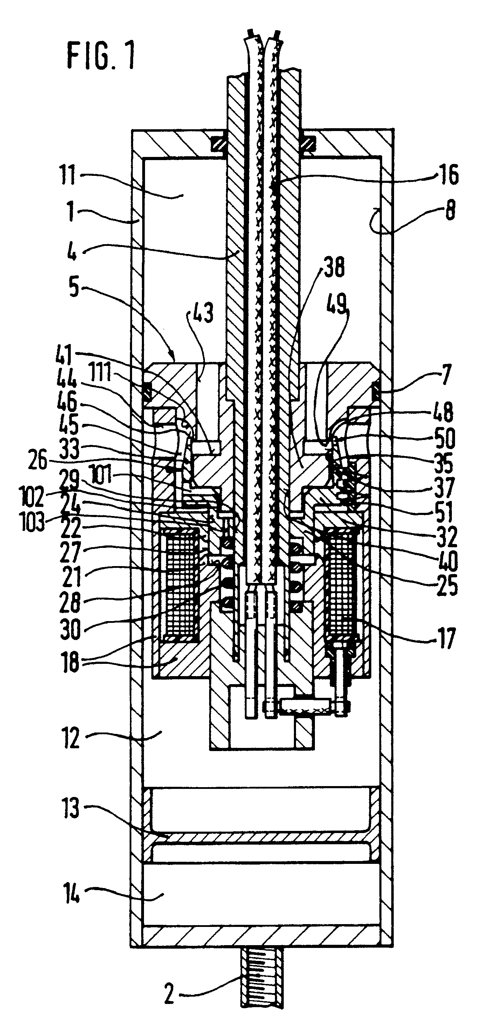

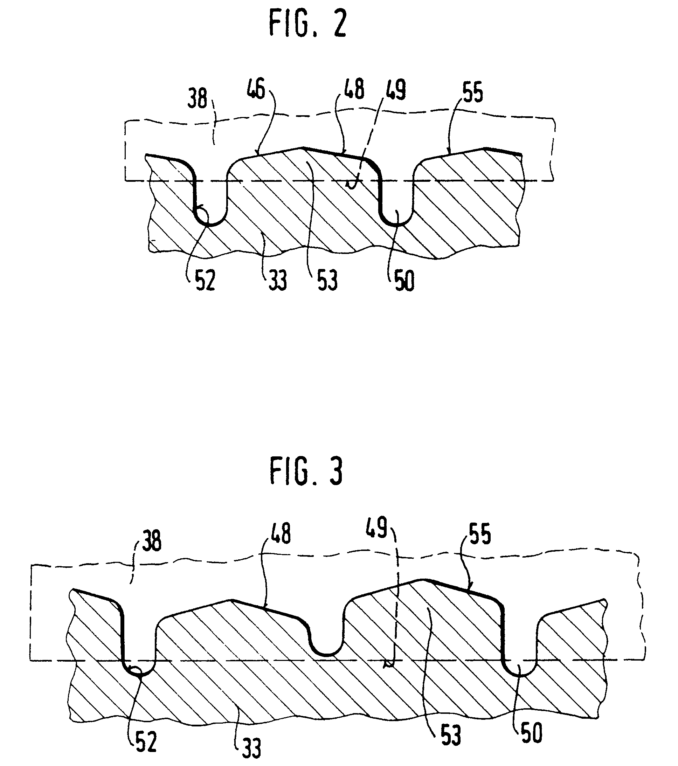

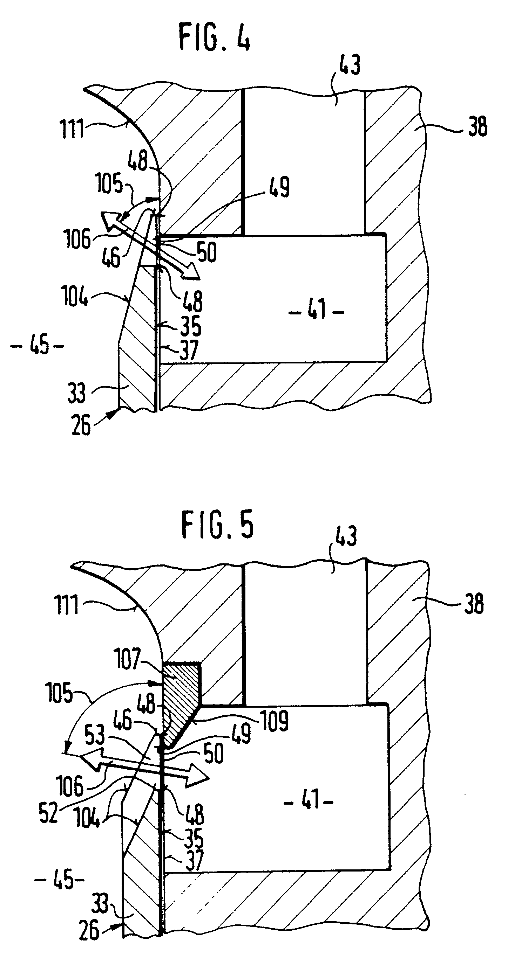

Ausführungsbeispiele der Erfindung sind in der Zeichnung vereinfacht dargestellt und im folgenden näher erläutert. Die Figur 1 zeigt ein erstes Ausführungsbeispiel eines Stoßdämpfers, Figur 2 und Figur 3 zeigen je eine Abwicklung der Steuerkante des Steuerschiebers aus Figur 1, Figur 4 einen Ausschnitt aus Figur 1, Figur 5 den gleichen Ausschnitt wie Figur 4 mit etwas abgewandelten Steuerkanten.

### Beschreibung der Ausführungsbeispiele

Der in Figur 1 dargestellte Stoßdämpfer verfügt über ein zylindrisches Mantelrohr 1, welches mit seiner einen Stirnseite an einer Fahrzeugachse 2 befestigt ist. Aus der anderen Stirnseite des Mantelrohrs 1 ragt eine Kolbenstange 4 heraus, welche an einem nicht dargestellten Fahrzeugaufbau angreift. Die Kolbenstange 4 ist an ihrem anderen Ende mit einem zylindrischen Kolben 5 verbunden, welcher unter Zwischenlage einer Dichtung 7 an einer inneren Mantelfläche 8 des Mantelrohres 1 axial gleiten kann.

Der Innenraum des Mantelrohres 1 wird durch den Kolben 5 in einen ersten Arbeitsraum 11 und einen zweiten Arbeitsraum 12 unterteilt. Innerhalb des Mantelrohres 1 ist durch eine bewegliche Trennwand 13 außerdem ein gasgefüllter Ausgleichsraum 14 abgetrennt, welcher zur Kompensation der Volumenzu- bzw. -abnahme in den Arbeitsräumen 11 und 12 durch das einfahrende bzw. ausfahrende Eigenvolumen der Kolbenstange 4 dient.

Die Kolbenstange 4 ist hohl und nimmt eine elektrische Zuleitung 16 auf, welche an eine koaxial innerhalb des Kolbens befindliche Magnetspule 17 angeschlossen ist. Die Magnetspule 17 befindet sich innerhalb eines einen Teil des Kolbens 5 bildenen Spulengehäuses 18, welches an der Innenseite der Magnetspule 17 in einem ringförmigen ersten Pol 21 ausläuft. Ein zweiter, ebenfalls ringförmiger Pol 22, welcher mit dem Spulengehäuse 18 verbunden ist, erstreckt sich unter Wahrung eines gewissen Abstandes axial in Richtung auf den ersten Pol 21. Beide Pole 21, 22 sind mit einer koaxialen Bohrung 24 versehen, in welche ein als Anker 25 wirkender Teilbereich eines hülsenförmigen Schiebers 26 zumindest teilweise hineinragt. Je nach der axialen Stellung des Ankers 25 in der Bohrung 24 überdeckt der Anker 25 in axialer Richtung nicht nur den zweiten Pol 22, sondern auch den ersten Pol 21. Die für die Magnetkraft auf den Anker 25 maßgebenden Magnetluftspalte befinden sich zwischen einem zylindrischen Außenmantel 27 des Ankers 25 und der die radialen Polflächen der Pole 21, 22 bildenden Bohrung 24 sowie zwischen einem sacklochartig zurückversetzten axialen Absatz 28 des ersten Pols 21 und einer dem Absatz 28 zugewandten Stirnfläche des Ankers 25.

Im Schieber 26 ist eine axiale Durchgangsbohrung 29, mittels derer der Schieber 26 auf der Kolbenstange 4 axial gleitend verschiebbar ist. Mittels einer die Kolbenstange 4 umgebenden Druckfeder 30 wird der Schieber 26 mit einer Kraft beaufschlagt, die bestrebt ist, den Schieber 26 vom ersten Pol 21 weg zu bewegen. Dementsprechend wird der Anker 25 und damit der Schieber 26 bei elektrischer Erregung der Magnetspule 17 entgegen der Kraft der Druckfeder 30 in Richtung auf eine stärkere Überdeckung zwischen dem zylindrischen Außenmantel 27 des Ankers 25 und dem ersten Pol 21 bewegt.

Der Druckfeder 30 abgewandt geht der Anker 25 über eine Erweiterung in Form einer Ringscheibe 32 in einen hülsenförmigen Steuerschieber 33 über, wobei der Durchmesser des Steuerschiebers 33 größer ist als der Durchmesser des Ankers 25. Der Steuerschieber 33 kann entweder, wie in Figur 1 dargestellt, zusammen mit dem Anker 25 Bestandteil eines Bauteils, dem Schieber 26, sein oder aus zwei zusammengefügten Bauteilen bestehen.

Der hülsenförmige Steuerschieber 33 kann mit einer feinbearbeiteten inneren Mantelfläche 35 auf einer ebenfalls feinbearbeiteten äußeren Mantelfläche 37 eines einen Teil des Kolbens 5 bildenden Zylinders 38 gleiten. Der Zylinder 38 ist mit einer Zentralbohrung 40 versehen, durch welche die Kolbenstange 4 ragt. Kolbenstange 4 und Zylinder 38 sind fest miteinander verbunden.

In der äußeren Mantelfläche 37 des Zylinders 38 ist eine umlaufende Ringnut 41 eingearbeitet. Eine oder mehrere axial außermittig verlaufende Aussparungen 43 stellen eine Strömungsverbindung zwischen der Ringnut 41 und dem ersten Arbeitsraum 11 her. Radial um die Ringnut 41 herum und außerhalb des Steuerschiebers 33 ist im Spulengehäuse 18 mindestens eine Strömungsöffnung 44 eingearbeitet, welche eine Strömungsverbindung zwischen einem den Schieber 26 aufnehmenden Steuerraum 45 und dem zweiten Arbeitsraum 12 herstellt.

Die Länge des Schiebers 26 ist so bemessen, daß, je nach axialer Stellung des Schiebers 26, der Steuerschieber 33 die Ringnut 41 in axialer Richtung mehr oder weniger überdeckt. Am Steuerschieber 33 befindet sich, der Magnetspule 17 abgewandt, eine Stirnseite 46. Die Kante zwischen der inneren Mantelfläche 35 und der Stirnseite 46 des Schiebers 26 ist als Schiebersteuerkante 48 ausgebildet, welche im Zusammenwirken mit einer die Ringnut 41 begrenzenden Kolbensteuerkante 49 die Große eines Drosselquerschnittes 50 bestimmt, über den das gesamte zwischen den Arbeitsräumen 11 und 12 ausgetauschte Dämpfungsfluid strömt. Die Kolbensteuerkante 49 ist eine relativ zum Kolben feststehende Kante. Das Dämpfungsfluid wird nur einmal angedrosselt.

Am Spulengehäuse 18 ist in der Nähe des Schiebers 26 ein Geber 51 befestigt, welcher der Erfassung der Stellung des Schiebers 26 relativ zum Kolben 5 dient. Der Geber 51, welcher beispielsweise induktiv oder kapazitiv mißt, gibt ein Meßsignal an eine elektronische Steuereinheit, welche über einen Soll-Ist-Vergleichsoperator ein Stellsignal erzeugt, das der Magnetspule 17 zugeführt wird. Damit wird ein Regelkreis gebildet und der Schieber 26 läßt sich wesentlich genauer und von Toleranzen unabhängiger positionieren als ohne Rückmeldung der Ist-Stellung des Schiebers 26.

Die Schiebersteuerkante 48 und/oder die Kolbensteuerkante 49 können mit einem Profil mit in axialer Richtung sich erstreckenden Erhebungen und Vertiefungen versehen werden.

Figur 2 zeigt als Beispiel einen möglichen Verlauf der Schiebersteuerkante 48 und der Kolbensteuerkante 49 bei einem Stoßdämpfer entsprechend Figur 1. In dieser Figur und in allen nachfolgenden Figuren sind gleiche Teile mit den gleichen Bezugszeichen versehen wie in Figur 1. Während die die Ringnut 41 begrenzende Kolbensteuerkante 49 gerade verläuft, ist das Profil der Schiebersteuerkante 48 des Steuerschiebers 33 ein Zahnprofil, bei dem die Vertiefungen wie Zahnlücken 52 und die Erhebungen wie Zähne 53 ausgebildet sind.

Je mehr der Schieber 26 bei Erregung der Magnetspule 17 angezogen wird, desto weiter lenkt der Steuerschieber 33 aus und um so mehr öffnet sich der Drosselquerschnitt 50.

Bei relativ geringer Auslenkung des Steuerschiebers 33 wird der Drosselquerschnitt 50 nur durch die Zahnlücken 52 gebildet, während die Zähne 53 die Kolbensteuerkante 49 des Zylinders 38 noch größtenteils bedeckt halten. Bei relativ weiter Auslenkung des Steuerschiebers 33 hebt die Schiebersteuerkante 48 auch im Bereich der Zähne 53 von der Kolbensteuerkante 49 ab. Der Drosselquerschnitt 50 erstreckt sich damit ohne Unterbrechung über den gesamten Umfang des Zylinders 38. Auf die Dämpfungskraft des Stoßdämpfers übertragen ist die Dämpfung relativ stark, wenn die Drosselquerschnitte 50 nur durch die Zahnlücken 52 gebildet sind und nimmt bei zunehmender Erregung der Magnetspule ab. Das Profil der Schiebersteuerkante 48 und der Kolbensteuerkante 49 kann so gestaltet werden, daß sich eine in weiten Grenzen bestimmbare Abhängigkeit der Dämpfungskraft vom Hub des Schiebers 26 ergibt.

Bei dem in Figur 2 dargestellten Ausführungsbeispiel ist der Schieber 26 so ausgelegt, daß bei normaler Arbeitsstellung gerade ein Teilbereich von abgeschrägt verlaufenden Flanken 55 der Zähne 53 in Überdeckung mit dem Zylinder 38 steht. Innerhalb dieser normalen Arbeitsstellung besteht eine stufenlose, lineare Abhängigkeit der Dämpfungskraft vom Hub des Schiebers 26.

Der Steuerschieber 33 ist so gestaltet, daß bei nicht ausgelenktem Steuerschieber 33 die Zahnlükken 52 mehr oder weniger offen bleiben.

Bei einem Ausfall der elektrischen Ansteuerung der Magnetspule 17 arbeitet der Stoßdämpfer mit der maximal möglichen Dämpfung.

Figur 3 zeigt wie Figur 2 einen möglichen Verlauf der Schiebersteuerkante 48. In Figur 3 ist jedoch die axiale Ausdehnung der Erhebungen und der Vertiefungen unterschiedlich dargestellt. Auch hier sind die Erhebenungen wie Zähne 53 und die Vertiefungen wie Zahnlücken 52 ausgebildet. Durch die unterschiedliche axiale Tiefe der Zahnlücken 52 ergibt sich eine weitere Verbesserung der Konstruktion und eine Erhöhung der Betriebssicherheit. Denn dadurch sind bei nicht ausgelenktem oder wenig ausgelenktem Steuerschieber 33, d.h. bei starker Dämpfung einige der Zahnlücken 52 vom Zylinder 38 abgedeckt. Damit können die nicht abgedeckten Zahnlücken 52, bei gleicher Dämpfungskraft, breiter ausgeführt sein. Das ergibt geringeren Einfluß von Toleranzen und geringere Schmutzempfindlichkeit. Mit zunehmender Auslenkung des Steuerschiebers 33, d.h. mit zunehmendem Drosselquerschnitt 50 ist es hingegen günstig, wenn der Drosselquerschnitt 50 von einer nicht zu geringen Anzahl von Zahnlücken 52 gebildet wird, weil dadurch an einzelnen Zahnlücken 52 eventuell unterschiedlich große radiale Komponenten von Strömungskräften gegenseitig besser kompensiert werden.

Durch die im folgenden beispielhaft erläuterte Gestaltung des Schiebers 26, des Steuerraumes 45 und der Kolbensteuerkante 49 ergeben sich besonders kleine axiale Strömungskräfte am Schieber 26. Der Druck im Steuerraum 45 kann über eine radiale Entlastungsverbindung 101, eine erste axiale Entlastungsverbindung 102 und eine zweite axiale Entlastungsverbindung 103 allseits auf den Schieber 26 wirken. Hier sind auch andere Entlastungsverbindungen denkbar, aber nicht erfindungswesentlich. Der Schieber 26 ist somit im statischen Fall druckausgeglichen. Wenn jedoch Fluid vom Steuerraum 45 in die Ringnut 41 oder umgekehrt von der Ringnut 41 in den Steuerraum 45 strömt, dann hat es im Bereich der Schiebersteuerkante 48 seine höchste Strömungsgeschwindigkeit und folglich ist dort der Staudruck (Geschwindigkeitsdruck; dynamischer Druck) am größten. Wegen der Bedingung, daß, unter Vernachlässigung von Verlusten, die Summe aus statischem Druck und Staudruck konstant ist, ist im Bereich der Schiebersteuerkante 48 und damit auf die Stirnfläche 46 der statische Druck geringer als im übrigen Bereich des Schiebers 26. Daraus resultiert eine axiale Kraft auf den Schieber 26 in schließender Richtung. Diese Kraft fällt um so geringer aus, je schmaler die Stirnseite 46 des Steuerschiebers 33 ausgebildet ist.

Figur 4 zeigt einen Ausschnitt aus Figur 1 mit der Ringnut 41 und einem Ende des Schiebers 26, an dem sich der Steuerschieber 33 mit Schiebersteuerkante 48 befindet.

Figur 5 zeigt den gleichen Ausschnit aus Figur 1 wie Figur 4, aber in etwas abgewandelter Ausführung.

In den Beispielen nach den Figuren 4 und 5 ist am Steuerschieber 33 eine Schräge 104 so angebracht, daß sich der Steuerschieber 33 auf dem der Schiebersteuerkante 48 zugewandten Ende schneidenartig verjüngt. Dadurch ergibt sich eine sehr schmale Stirnseite 46. Aus Festigkeitsgründen ist es günstig, wenn, wie dargestellt, eine minimale Breite an der Stirnseite 46 gelassen wird.

In Figur 4 bildet die Schräge 104 einen umlaufenden Kegel. In Figur 5 ist die Schräge 104 so ausgebildet, daß die Stirnseite 46 in der Zahnlücke 52 etwa gleich schmal ist wie am Zahn 53.

Neben der zuerst beschriebenen Kraft gibt es weitere, welche nun ebenfalls anhand der Ausführungsbeispiele nach Figur 4 und 5 erläutert werden sollen.

In Figur 4 und 5 wird mit 105 der Winkel zwischen der Strömungsrichtung 106 des Fluids durch den Drosselquerschnitt 50 und der Betätigungsrichtung des Schiebers 26 bezeichnet.

Ist der Winkel 105 kleiner als 90°, dann wirkt eine weitere axiale Kraft auf den Schieber 26. Je näher der Winkel 105 bei 90° ist, desto kleiner ist diese axiale Kraft. Dieser Winkel 105 wird bekanntlich bestimmt vom radialen Spiel zwischen der inneren Mantelfläche 35 des Steuerschiebers 33 und der äußeren Mantefläche 37 des Zylinders 38, von der Form der Schiebersteuerkante 48 und der Kolbensteuerkante 49 und vom axialen Abstand der beiden Steuerkanten, ferner aber auch von der Gestalt des Raumes aus dem das Fluid in den Drosselquerschnitt 50 einströmt bzw. in das es abströmt. Im Ausführungsbeispiel nach Figur 4 sind diese Räume so gestaltet, daß der Winkel 105 relativ nahe bei 90° liegt. Dies wird erstens erreicht durch die bereits oben beschriebene Schräge 104 am Steuerschieber 33 und zweitens durch möglichst großen axialen Abstand zwischen der Schiebersteuerkante 48 und der Kolbensteuerkante 49. Auch bei stärker eingestellter Dämpfung ergibt sich dieser möglichst große axiale Abstand durch die bereits weiter oben beschriebene und in jenem Zusammenhang sich auch positiv auswirkende Profilierung der Schiebersteuerkante 48 und/oder der Kolbensteuerkante 49 deshalb, weil durch die Profilierung ein Teil der Steuerkanten überdeckt sind, so daß für den Drosselquerschnitt nur einzelne Lücken verbleiben.

Im Ausführungsbeispiel nach Figur 5 ergibt sich eine weitere Verringerung der auf dem Schieber 26 einwirkenden Kräfte. Durch schneidenartige Ausgestaltung eines die Kolbensteuerstange 49 bildenden Eckteils 107 der Ringnut 41, was durch Anbringen einer Schräge 109 erreicht wird, wird der Anströmwinkel 105 noch etwas in Richtung 90° verbessert.

Das Eckteil 107 und der Zylinder 38 können, wie in Figur 5 dargestellt, aus verschiedenen oder, wie nicht dargestellt, aus einem Teil bestehen.

Die dargestellte Verminderung der axialen Kräfte auf den Schieber 26 wird noch dadurch verbessert, daß, wegen der Profile an der Schiebersteuerkante 48 und/oder an der Kolbensteuerkante 49, bei stärkerer Dämpfung, diese Kräfte nur in Teilbereichen des Steuerschieberumfangs auf diesen wirken.

Die oben beschriebenen Kräfte wirken alle in die den Drosselquerschnitt verkleinernde Richtung. Diese Kräfte können mindestens teilweise durch eine Kraft kompensiert werden, welche durch eine günstige und nachfolgend näher erläuterte Gestaltung des Steuerraumes 45 entsteht.

Der Steuerraum 45 wird gegenüberliegend der Stirnseite 46 des Schiebers 26 durch eine Umlenkung 111 begrenzt. Diese Umlenkung 111 kann beispielsweise als Rundung ausgebildet sein. Durch diese Umlenkung 111 wird das radial aus der mindestens einen Strömungsöffnung 44 in den Steuerraum 46 strömende Fluid zumindest teilweise in axiale Richtung umgelenkt. Dies bewirkt eine Anströmung des Fluids auf die Stirnseite 46 des Schiebers 26. Daraus ergibt sich eine Kraft mit dem Bestreben den Drosselquerschnitt 50 zu öffnen. Die Richtung dieser Kraft ist den oben beschriebenen Kräften entgegensetzt, wodurch jene mindestens teilweise kompensiert werden.

Der Schieber 26 ist rotationssymetrisch. Dadurch werden die in radialer Richtung wirkenden Komponenten der auf den Schieber 26 wirkenden Kräfte innerhalb des Schiebers kompensiert.

Es ist ein besonderer Vorteil, wenn der Steuerschieber 33 einen möglichst großen Durchmesser aufweist, da schon bei geringem Ankerhub große Drosselquerschnitte 50 zu realisieren sind. Der Durchmesser des Steuerschiebers 33 sollte zweckmäßigerweise deutlich größer sein als der Durchmesser der Kolbenstange 4.

**Patentansprüche**

1. Stoßdämpfer, insbesondere für Fahrzeuge, mit einem innerhalb eines Mantelrohres (1) in einem Zylinder geführten und an einer Kolbenstange (4) befestigten Kolben (5) mit einem Kolbenkopf, der im Zylinder zwei mit einem Dämpfungsfluid gefüllte Arbeitsräume (11, 12) voneinander trennt, sowie mit mindestens einer Strömungsverbindung zwischen den Arbeitsräumen (11, 12), über welche mindestens eine Teilmenge des zwischen den Arbeitsräumen sich austauschenden Dämpfungsfluids strömt und mit einer elektromagnetischen, eine Magnetspule (17) und einen Anker (25) aufweisenden Stelleinrichtung, die dem Kolben wirkmäßig zugeordnet ist, ferner mit einem mit dem Anker (25) verbundenen Steuerschieber (33), der eine Schiebersteuerkante (48) hat, deren jeweilige Lage gegenüber einer in bezug zum Kolben (5) feststehenden Kante (49) die Androsselung des Dämpfungsfluids innerhalb der mindestens einen Strömungsverbindung bestimmt, wobei der Steuerschieber (33) an einer die Schiebersteuerkante (48) bildenden Stirnseite in radialer Richtung schmal ausgebildet ist, dadurch gekennzeichnet, daß die Schiebersteuerkante (48) ein Profil aufweist mit mindestens einer, sich in Betätigungsrichtung des Steuerschiebers (33) erstreckenden Erhebung und Vertiefung und daß die Stelleinrichtung am eine Dichtung (7) tragenden Kolbenkopf angeordnet ist.

2. Stoßdämpfer enthaltend die Merkmale gemäß dem Oberbegriff des Anspruchs 1, dadurch gekennzeichnet, daß die feststehende Kante (49) an einem in radialer Richtung schmal ausgeformten Eckteil (107) gebildet wird und ein Profil aufweist mit mindestens einer, sich in Betätigungsrichtung des Steuerschiebers (33) erstreckenden Erhebung und Vertiefung und daß die Stelleinrichtung am eine Dichtung (7) tragenden Kolbenkopf angeordnet ist.

3. Stoßdämpfer nach Anspruch 1 oder 2, dadurch gekennzeichnet, daß sich der Steuerschieber (33) auf dem der Schiebersteuerkante (48) zugewandten Ende schneidenartig verjüngt.

4. Stoßdämpfer nach Anspruch 1, dadurch gekennzeichnet, daß sich ein Ringnut-Eckteil (107), an dem sich die feststehende Kante (49) befindet und das mit mindestens der Schiebersteuerkante (48) einen Drosselquerschnitt bildet, in Richtung der Kante (49) schneidenartig verjüngt.

5. Stoßdämpfer nach Anspruch 2, dadurch gekennzeichnet, daß das Eckteil (107) in Richtung der Kante (49) sich schneidenartig verjüngt.

6. Stoßdämpfer nach einem der Ansprüche 1 bis 5, dadurch gekennzeichnet, daß die Ausdehnung einzelner Erhebungen in Betätigungsrichtung des Steuerschiebers (33) unterschiedlich ist.

7. Stoßdämpfer nach einem der Ansprüche 1 bis 6, dadurch gekennzeichnet, daß die Ausdehnung einzelner Vertiefungen in Betätigungsrichtung des Steuerschiebers (33) unterschiedlich ist.

8. Stoßdämpfer nach mindestens einem der Ansprüche 1 bis 7, dadurch gekennzeichnet, daß mindestens eine Erhebung mindestens einer Kante die Form eines Zahnes (53) und mindestens eine Vertiefung die Form einer Zahnlücke (52) aufweisen.

9. Stoßdämpfer nach einem der Ansprüche 1 bis 8, dadurch gekennzeichnet, daß die den jeweiligen Drosselquerschnitt bestimmenden Kanten (48, 49) mit ihrem Profil so ausgebildet sind, daß die Dämpferkraft linear mit dem Hub des Steuerschiebers (33), mindestens in einem Teilbereich des Hubs, veränderbar ist.

10. Stoßdämpfer nach mindestens einem der Ansprüche 1 bis 9, dadurch gekennzeichnet, daß die den Drosselquerschnitt bestimmende Schiebersteuerkante (48) bei mindestens einem Teil der möglichen Stellungen des Steuerschiebers ohne Unterbrechung umläuft.

11. Stoßdämpfer nach mindestens einem der Ansprüche 1 bis 10, dadurch gekennzeichnet, daß die den Drosselquerschnitt bestimmende relativ zum Kolben (5) feststehende Kante (49) bei mindestens einem Teil der möglichen Stellungen des Steuerschiebers (33) ohne Unterbrechung umläuft.

12. Stoßdämpfer nach mindestens einem der Ansprüche 1 bis 11, dadurch gekennzeichnet, daß der Drosselquerschnitt bei mindestens einem Teil der möglichen Stellungen des Steuerschiebers (33) durch eine zusammenhängende nicht unterbrochene Drosselquerschnittsfläche gebildet wird.

13. Stoßdämpfer nach mindestens einem der Ansprüche 1 bis 12, dadurch gekennzeichnet, daß sich der Drosselquerschnitt bei mindestens einem Teil der möglichen Stellungen des Steuerschiebers (33) aus mehreren Einzel-Drosselquerschnittsflächen zusammensetzt.

14. Stoßdämpfer nach einem der Ansprüche 1 bis 13, dadurch gekennzeichnet, daß in einem Steuerraum (45), gegenüber der Stirnseite (46) des Steuerschiebers (33) eine Umlenkung (108) vorgesehen ist.

15. Stoßdämpfer nach einem der Ansprüche 1 bis 14, dadurch gekennzeichnet, daß die zwischen den Arbeitsräumen (11, 12) sich austauschende Teilmenge des Dämpfungsfluids in der jeweiligen Fließrichtung nur einmal androsselbar ist durch den Drosselquerschnitt.

16. Stoßdämpfer nach einem der Ansprüche 1 bis 15, dadurch gekennzeichnet, daß die gesamte Menge des zwischen den Arbeitsräumen (11, 12) sich austauschenden Dämpfungsfluids über die mindestens eine Strömungsverbindung strömt.

17. Stoßdämpfer nach einem der Ansprüche 1 bis 16, dadurch gekennzeichnet, daß der Durchmesser der Schiebersteuerkante (48) und der Kante (49) deutlich größer ist als der Durchmesser der Kolbenstange (4).

18. Stoßdämpfer nach mindestens einem der Ansprüche 1 bis 17, dadurch gekennzeichnet, daß die Stelleinrichtung koaxial zur Stoßdämpferachse wirksam ist.

19. Stoßdämpfer nach Anspruch 18, dadurch gekennzeichnet, daß der Anker (25) auf die Kolbenstange (4) gleitbeweglich aufgesetzt ist.

20. Stoßdämpfer nach einem der vorhergehenden Ansprüche, gekennzeichnet durch die Verwendung eines Gebers (51), welcher die Lage eines beweglichen, den Drosselquerschnitt (50) bestimmenden Bauteils (26) relativ zum Kolben (5) erfaßt.

21. Stoßdämpfer nach Anspruch 20, dadurch gekennzeichnet, daß das den Drosselquerschnitt (50) bestimmende Bauteil der Anker (25) ist.

22. Stoßdämpfer enthaltend die Merkmale gemäß dem Oberbegriff des Anspruchs 1, dadurch gekennzeichnet daß die feststehende Kante (49) an einem in radialer Richtung schmal ausgeformten Eckteil (107) gebildet wird und ein Profil aufweist mit mindestens einer, sich in Betätigungsrichtung des Steuerschiebers (33) erstreckenden Erhebung und Vertiefung, daß die Schiebersteuerkante (48) ein Profil aufweist mit mindestens einer, sich in Betätigungsrichtung des Steuerschiebers (33) erstreckenden Erhebung und Vertiefung und daß die Stelleinrichtung am eine Dichtung (7) tragenden Kolbenkopf angeordnet ist.

## Claims

1. Shock absorber, in particular for vehicles, having a piston (5), which is guided in a cylinder inside an outer sleeve (1), is mounted on a piston rod (4), and has a piston head which separates from one another in the cylinder two working chambers (11, 12) filled with a damping fluid, and having at least one flow connection between the working chambers (11, 12), via which at least a partial amount of the damping fluid being exchanged between the working chambers flows, and having an electromagnetic final control element, which has a magnet coil (17) and an armature (25), and is assigned operationally to the piston, and further having a control slide (33), which is connected to the armature (25) and has a slide control edge (48) whose respective position relative to an edge (49) fixed with respect to the piston (5) determines the restriction of the damping fluid inside the at least one flow connection, the control slide (33) being constructed to be narrow in the radial direction on an end face forming the slide control edge (48), characterised in that the slide control edge (48) has a profile having at least one elevation and depression extending in the actuating direction of the control slide (33), and in that the final control element is arranged on the piston head carrying a seal (7).

2. Shock absorber comprising the features in accordance with the preamble of Claim 1, characterised in that the fixed edge (49) is formed on a corner piece (107) constructed to be narrow in the radial direction, and has a profile having at least one elevation and depression extending in the actuating direction of the control slide (33), and in that the final control element is arranged on the piston head carrying a seal (7).

3. Shock absorber according to Claim 1 or 2, characterised in that the control slide (33) tapers like a cutting edge on the end facing the slide control edge (48).

4. Shock absorber according to Claim 1, characterised in that an annular groove corner piece (107), on which the fixed edge (49) is located, and which forms a restricting cross-section with at least the slide control edge (48), tapers like a cutting edge in the direction of the edge (49).

5. Shock absorber according to Claim 2, characterised in that the corner piece (107) tapers like a cutting edge in the direction of the edge (49).

6. Shock absorber according to one of Claims 1 to 5, characterised in that the extent of individual elevations is different in the actuating direction of the control slide (33).

7. Shock absorber according to one of Claims 1 to 6, characterised in that the extent of individual depressions is different in the actuating direction of the control slide (33).

8. Shock absorber according to at least one of Claims 1 to 7, characterised in that at least one elevation of at least one edge has the form of a tooth (53), and at least one depression has the form of a tooth space (52).

9. Shock absorber according to one of Claims 1 to 8, characterised in that the edges (48, 49) determining the respective restricting cross-section are constructed with their profile such that the damper force can be varied linearly with the stroke of the control slide (33), at least in a subregion of the stroke.

10. Shock absorber according to at least one of Claims 1 to 9, characterised in that the slide control edge (48) determining the restricting cross-section runs round uninterrupted in at least a portion of the possible positions of the control slide.

11. Shock absorber according to at least one of Claims 1 to 10, characterised in that the edge (49) determining the restricting cross-section and fixed relative to the piston (5) runs round uninterrupted in at least a portion of the possible positions of the control slide (33).

12. Shock absorber according to at least one of Claims 1 to 11, characterised in that in at least a portion of the possible positions of the control slide (33) the restricting cross-section is formed by a continuous, uninterrupted restricting cross-sectional area.

13. Shock absorber according to at least one of Claims 1 to 12, characterised in that in at least a portion of the possible positions of the control slide (33) the restricting cross-section is composed of a plurality of individual restricting cross-sectional areas.

14. Shock absorber according to one of Claims 1 to 13, characterised in that a deflection (108) is provided in a control chamber (45) opposite the end face (46) of the control slide (33).

15. Shock absorber according to one of Claims 1 to 14, characterised in that the partial amount of the damping fluid exchanged between the working chambers (11, 12) can be restricted by the restricting cross-section only once in the respective flow direction.

16. Shock absorber according to one of Claims 1 to 15, characterised in that the total amount of the damping fluid exchanged between the working chambers (11, 12) flows via the at least one flow connection.

17. Shock absorber according to one of Claims 1 to 16, characterised in that the diameter of the slide control edge (48) and of the edge (49) is far larger than the diameter of the piston rod (4).

18. Shock absorber according to at least one of Claims 1 to 17, characterised in that the final control element acts coaxially relative to the shock absorber axis.

19. Shock absorber according to Claim 18, characterised in that the armature (25) is mounted slideably on the piston rod (4).

20. Shock absorber according to one of the preceding claims, characterised by the use of a pick-up (51) which detects the position relative to the piston (5) of a movable component (26) determining the restricting cross-section (50).

21. Shock absorber according to Claim 20, characterised in that the component determining the restricting cross-section (50) is the armature (25).

22. Shock absorber comprising the features in accordance with the preamble of Claim 1, characterised in that the fixed edge (49) is formed on a corner piece (107) constructed to be narrow in the radial direction, and has a profile having at least one elevation and depression extending in the actuating direction of the control slide (33), and the slide control edge (48) has a profile having at least one elevation and depression extending in the actuating direction of the control slide (33), and in that the final control element is arranged on the piston head carrying a seal (7).

**Revendications**

1. Amortisseur de chocs, en particulier pour véhicule automobile, avec un piston (5) guidé à l'intérieur d'un tube enveloppe (1) dans un cylindre et fixé sur une tige de piston (4), avec une tête de piston, qui sépare dans le cylindre deux chambres de travail (11, 12), remplies d'un fluide amortisseur, l'une de l'autre, ainsi qu'avec au moins une liaison d'écoulement entre les chambres de travail (11, 12) par laquelle s'écoule au moins une partie du fluide amortisseur passant entre les chambres de travail, et avec un dispositif de commande électromagnétique comprenant une bobine d'électroaimant (17) et une armature (25), dispositif qui est associé au piston de façon active, en outre avec un tiroir de commande (33), relié à l'armature (25), tiroir qui a une arête de commande de tiroir (48) dont chaque position par rapport à une arête (49) solidaire du piston (5) détermine l'étranglement du fluide amortisseur à l'intérieur d'au moins l'une des liaisons d'écoulement, le tiroir de commande (33) étant façonné étroitement dans le sens axial sur une face frontale constituant l'arête (48) de commande du tiroir, amortisseur de chocs caractérisé en ce que l'arête de commande de tiroir (48) présente un profil qui comporte au mois une bosse et un creux s'étendant dans la direction dans laquelle le tiroir de commande (33) agit et en e que le dispositif de commande es disposé sur la tête du piston portant un joint d'étanchéité (7).

2. Amortisseur de chocs comportant les éléments selon le préambule de la revendication 1, caractérisé en ce que l'arête fixe (49) constituée sur un coin (107) de forme étroite dans le sens radial et présente un profil avec au moins une bosse et un creux s'étendant dans le sens où agit le tiroir de commande (33) et en ce que le dispositif de commande est disposé sur la tête de piston portant un joint d'étanchéité (7).

3. Amortisseur de chocs selon la revendication 1 ou 2, caractérisé en ce que le tiroir de commande (33) se rétrécit comme un couteau vers l'extrémité tournée du côté de l'arête de commande de tiroir (48).

4. Amortisseur de chocs selon la revendication 1, caractérisé en ce que un coin (107) de rainure annulaire se trouve sur l'arête fixe (49) et forme une section d'étranglement avec au moins l'arête de commande de tiroir (48), en se rétrécissant à la manière d'un couteau dans le sens de l'arête (49).

5. Amortisseur de chocs selon la revendication 2, caractérisé en ce que le coin (107) se rétrécit en forme de couteau dans le sens de l'arête (49).

6. Amortisseur de chocs selon l'une des revendications 1 à 5, caractérisé en ce que les différentes bosses ont des extensions différentes dans le sens où agit le tiroir de commande (33).

7. Amortisseur de chocs selon l'une des revendications 1 à 6, caractérisé en ce que les différents creux ont des extensions différentes dans le sens où agit le tiroir de commande (33).

8. Amortisseur de chocs selon au moins l'une des revendications 1 à 7, caractérisé en ce qu'au moins une bosse d'au moins une arête présente la forme d'une dent (53) et au moins un creux présente la forme d'un intervalle de dent (52).

9. Amortisseur de chocs selon l'une des revendications 1 à 8, caractérisé en ce que les arêtes (48, 49), qui déterminent chaque section d'étranglement par leur profil, sont constituées de telle façon que la force d'amortissement puisse être modifiée de façon linéaire en fonction de la course du tiroir de commande (33), au moins dans une partie de cette course.

10. Amortisseur de chocs selon au moins l'une des revendications 1 à 9, caractérisé en e que l'arête (48) de tiroir de commande déterminant la section d'étranglement fait sans interruption le tour du moins pour une partie des positions possibles du tiroir de commande.

11. Amortisseur de chocs selon au moins l'une des revendications 1 à 10, caractérisé en ce que l'arête fixe (49) déterminant la section d'étranglement par rapport au piston (5) fait sans interruption le tour pour au moins une partie des positions possibles du tiroir de commande (33).

12. Amortisseur de chocs, selon au moins l'une des revendications 1 à 11, caractérisé en ce que la section d'étranglement est formée pour au moins une partie des positions possibles du tiroir de commande (33) par une face ininterrompue de section d'étranglement correspondante.

13. Amortisseur de chocs selon au moins l'une des revendications 1 à 12, caractérisé en ce que la section d'étranglement pour au moins une partie des positions possibles du tiroir de commande (33) se composent de plusieurs faces individuelles de section d'étranglement.

14. Amortisseur de chocs selon l'une des revendications 1 à 13, caractérisé en ce qu'il est prévu dans une chambre de travail (45), en regard de 1 face frontale (48) du tiroir de commande (33) une courbure (108).

15. Amortisseur de chocs selon l'une des revendications 1 à 14, caractérisé en ce que la quantité partielle de fluide d'amortissement passant d'une chambre de travail (11, 12) dans l'autre ne peut être étranglée qu'une fois dans chaque sens d'écoulement par la section d'étranglement.

16. Amortisseur de chocs selon l'une des revendications 1 à 15, caractérisé en ce que la quantité toute entière du fluide d'amortissement qui passe d'une chambre de travail (11, 12) dans l'autre s'écoule par au moins l'une des liaisons d'écoulement.

17. Amortisseur de chocs selon l'une des revendications 1 à 16, caractérisé en ce que le diamètre de l'arête (48) de commande de tiroir et de l'arête (49) est nettement plus grand que le diamètre de la tige de piston (4).

18. Amortisseur de chocs selon au moins l'une de revendications 1 à 17, caractérisé en ce que le dispositif de commande agit coaxialement à l'axe de l'amortisseur de chocs.

**19.** Amortisseur de chocs, selon la revendication 18, caractérisé en ce que l'armature est montée, de façon à pouvoir glisser, sur la tige de piston (4).

**20.** Amortisseur de chocs selon l'une des revendications précédentes, caractérisé par l'emploi d'un détecteur (51), lequel enregistre la position d'une pièce constitutive mobile (26) déterminant la section d'étranglement (50) par rapport au piston (5).

**21.** Amortisseur de chocs selon la revendication 20, caractérisé en ce que la pièce constitutive qui détermine la section d'étranglement (50) est l'armature (25).

**22.** Amortisseur de chocs contenant les moyens selon le préambule de la revendication 1, caractérisé en ce que l'arête fixe (49) est formée sur un coin (107) de forme étroite dans le sens radial et présente un profil avec au moins un creux et une bosse s'étendant dans le sens où agit le tiroir de commande (33), en ce que l'arête de tiroir de commande (48) présente un profil avec au moins une bosse et un creux s'étendant dans ce sens où agit le tiroir de commande (33) et en ce que le dispositif de commande est disposé sur la tête de piston portent un joint d'étanchéité (7).

# FIG. 1

## FIG. 2

## FIG. 3

## FIG. 4

## FIG. 5